# EUROPÄISCHE PATENTSCHRIFT

(11) **EP 1 145 922 B1**
(45) Veröffentlichungstag und Bekanntmachung des Hinweises auf die Patenterteilung: **15.06.2005**
(21) Anmeldenummer: 01107434.1
(22) Anmeldetag: 27.03.2001
(51) Int. Cl.: B60R 21/20

(54) **Fahrzeuglenkrad mit verschieblich gelagertem Gassackmodul**
Vehicle steering wheel with a movable airbag module
Volant de véhicule avec module de coussin gonflable déplaçable

(30) Priorität: 10.04.2000 DE 20006595 U
(43) Veröffentlichungstag der Anmeldung: 17.10.2001
(73) Patentinhaber: TRW Automotive Safety Systems GmbH, 63743 Aschaffenburg (DE)
(72) Erfinder: Schuler, Patrik, 63785 Obernburg (DE)
(74) Vertreter: Kitzhofer, Thomas, Dipl.-Ing.

(56) Entgegenhaltungen:
- EP-A- 0 754 600
- EP-A- 0 926 039
- DE-A- 19 850 648
- US-A- 5 350 190
- US-A- 5 738 369

## Beschreibung

Die Erfindung betrifft ein Fahrzeuglenkrad nach dem Oberbegriff des Anspruchs 1.

Gassackmodule, die längsverschieblich im Fahrzeuglenkrad gelagert sind, um über ihre Bewegung die Hupe zu betätigen, werden als "floating-horn Module" bezeichnet, also in Axialrichtung schwimmend oder verschieblich gelagerte Module. Die Befestigung von solchen Modulen am Lenkrad ist relativ aufwendig, denn es muß stets eine Rückstellkraft über ein Federelement bereitgestellt werden, das bestrebt ist, das Gassackmodul in die Grundstellung zu drücken.

Die US-A-5 738 369 zeigt ein gattungsgemäßes Fahrzeuglenkrad, bei dem ein Gassackmodul eine Montageplatte umfaßt. An dieser Montageplatte werden auf der dem Fahrer zugewandten Seite ein Gasgenerator und eine Gassackabdeckung montiert. Auf der entgegengesetzten Seite wird die Montageplatte an der Lenkradnabe verrastet, allerdings bleibt das Modul durch Federelemente von der Nabe beabstandet. Bei einem Druck auf die Gassackabdeckung geben diese Federelemente nach, wodurch ein Kontakt hergestellt wird, der die Hupe auslöst.

Die Erfindung schafft ein Fahrzeuglenkrad, bei dem das Gassackmodul sehr einfach und kostengünstig am Fahrzeuglenkrad befestigt werden kann. Dies wird bei einem Fahrzeuglenkrad der eingangs genannten Art mit den Merkmalen des Anspruchs 1 erreicht.

Beim erfindungsgemäßen Gassacklenkrad hat das Federelement eine Mehrfachfunktion inne, denn es sorgt einerseits für die Rast- oder Schnappverbindung, mit der das Modul einfach am Fahrzeuglenkrad befestigt werden kann, und andererseits sorgt es für die Rückstellkraft bei der Hupenbetätigung. Die im Stand der Technik notwendigen zahlreichen Teile und Federelemente werden erfindungsgemäß durch ein Federelement ersetzt, wobei natürlich mehrere Federelemente vorgesehen sein können, die jeweils für sich einen Teil der Rastfunktion und der Rückstellfunktion übernehmen.

Vorzugsweise ist das Federelement ein umgeformtes Federblech, welches kostengünstig herstellbar ist. Das Federblech kann eine Kunststoffumspritzung aufweisen und als separat am Gassackmodul oder am Halteteil befestigbare Einheit ausgebildet sein.

Gemäß der bevorzugten Ausführungsform hat das Federelement mehrere Abschnitte, die die verschiedenen Funktionen erfüllen. Ein erster Abschnitt dient der Schaffung der Rastverbindung und ein zweiter Abschnitt der Schaffung der Rückstellkraft. Wenn das Federelement ein Federblech ist, kann der erste Abschnitt ein im Querschnitt V-förmiger, in die Ausnehmung ragender umgeformter Federblechabschnitt sein.

Der zweite Abschnitt ist vorzugsweise ein radial bezüglich der Längsachse abstehender, gebogener Federblechabschnitt.

Der zweite Abschnitt kann das Gassackmodul in der Grundstellung so gegen den ersten Abschnitt drücken, daß das Gassackmodul in der Grundstellung spielfrei gelagert ist. Das Gassackmodul wird somit zwischen dem ersten und dem zweiten Abschnitt eingespannt.

Eine sehr einfache Ausbildung des ersten und zweiten Abschnitts kann dadurch erreicht werden, daß das Federblech eine H-förmige Ausnehmung hat, durch die zwei einseitig gelagerte Blechlappen definiert sind, die die beiden Abschnitte bilden.

Eine Ausgestaltung der Erfindung sieht vor, daß das Federelement ein an dem Halteteil oder am Gassackmodul befestigter Einsatz ist, d.h. ein separates Teil, welches kostengünstig bei einem Federhersteller gefertigt werden kann und das nur noch am Halteteil oder am Gassackmodul befestigt werden muß, bevor Gassackmodul und Halteteil aneinander befestigt werden.

Die Befestigung des Einsatzes erfolgt vorteilhafterweise durch einen dritten Abschnitt des als Federblech ausgebildeten Federelements, wobei dieser dritte Abschnitt eine Rastverbindung bilden kann, mit der die Befestigung des Einsatzes am Halteteil oder am Gassackmodul erreicht wird.

Das Halteteil ist bevorzugt die topfförmig ausgebildete Nabe des Lenkrades, in die das Gassackmodul eingesetzt wird. Das Einsetzen und Arretieren des Gassackmoduls im Halteteil wird dadurch noch erleichtert, daß Halteteil und Gassackmodul eine axial verlaufende Führung haben, welche das Gassackmodul umfangsmäßig im Halteteil positioniert. Durch diese Führung wird bevorzugt auch die Montagestellung des Gassackmoduls eindeutig definiert.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Fig. 1: eine perspektivische Ansicht des Lenkradskeletts als Teil des erfindungsgemäßen Fahrzeuglenkrads,
- Fig. 2: eine Draufsicht auf den Nabenbereich des in Fig. 1 gezeigten Lenkradskelettes,
- Fig. 3: einen Längsschnitt durch das Fahrzeuglenkrad im Bereich der Nabe bei eingesetztem Gassackmodul,
- Fig. 4: einen Schnitt längs der Linie IV-IV in Fig. 3 und
- Fig. 5: eine Ansicht eines als Einsatz ausgebildeten Federelementes in Richtung des Pfeils X in Fig. 4.

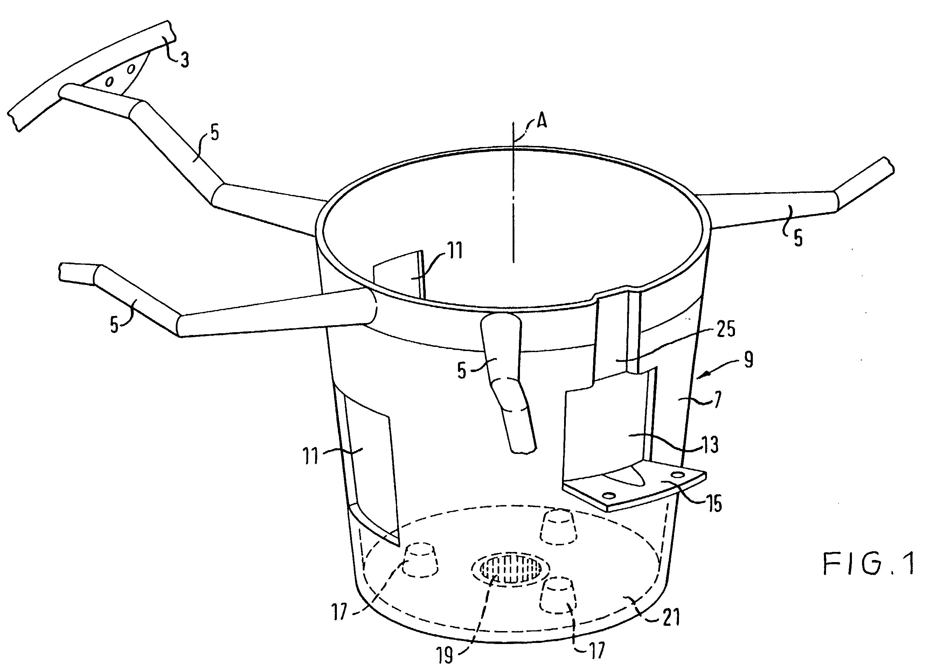

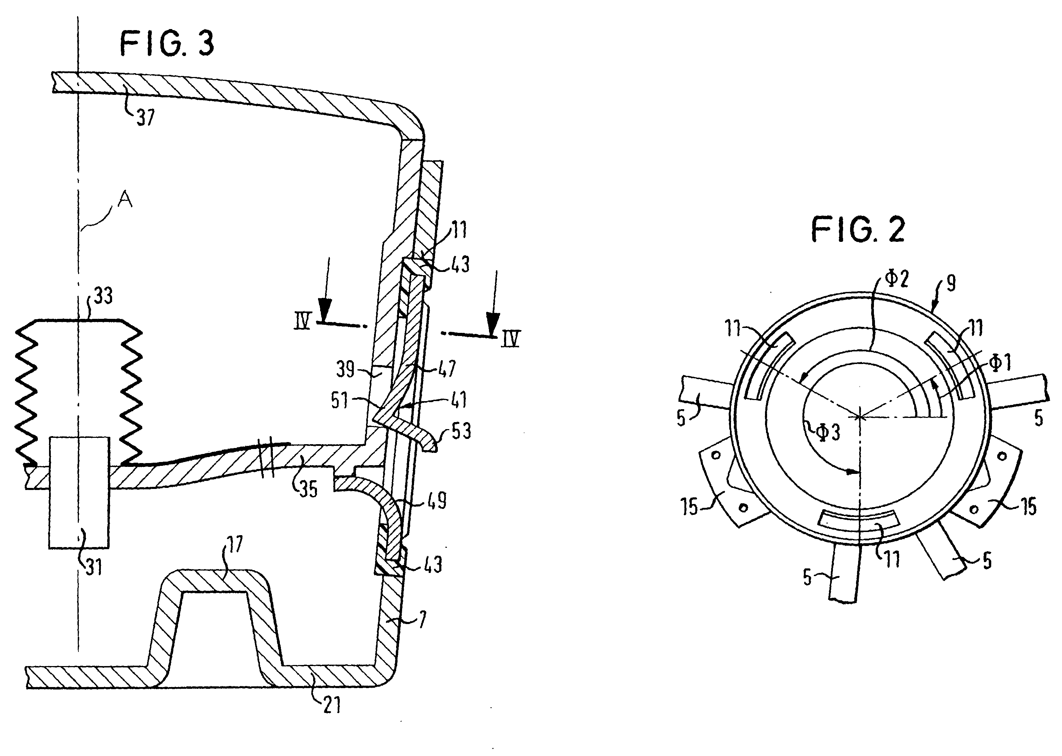

In Fig. 1 ist ein Lenkradskelett für ein Fahrzeuglenkrad dargestellt, das einen Lenkradkranz 3, mehrere Speichen 5 und eine Lenkradnabe 7 aufweist. Die Lenkradnabe 7 ist topfförmig ausgestaltet und ist zum Fahrer hin offen. Die topfförmige Nabe wird im folgenden als Halteteil bezeichnet. Zu betonen ist, daß es auch möglich ist, ein separates Halteteil auf eine scheibenförmige Nabe zu setzen und an ihr zu befestigen, um eine Aufnahme für ein Gassackmodul zu schaffen. Auf dem Umfang des vorzugsweise kreiszylindrisch ausgebildeten Halteteils, welches das Bezugszeichen 9 trägt, sind in der Zylinderwand gleichmäßig verteilt (vgl. Fig. 2) drei fensterartige Ausnehmungen 11 vorgesehen. Die Winkel Φ1 bis Φ3 sollen die Lagen der Ausnehmungen 11 in Umfangsrichtung definieren. Neben den Ausnehmungen 11 gibt es noch zwei Ausnehmungen 13, bei denen der ausgeschnittene Bereich der Zylinderwand nach unten und radial nach außen umgebogen ist, um einen radialen Befestigungsflansch 15 zur Befestigung von Multifunktionsschaltern (nicht gezeigt) zu schaffen.

Die Stirnwand des topfförmigen Halteteils hat mehrere axial nach innen vorstehende Zapfen 17, die als Anschläge für das in das Halteteil 9 einzusetzende Gassackmodul dienen. Mit 19 ist ein Nabenfortsatz an der Stirnwand 21 bezeichnet, mit dem das Lenkrad an der Lenkwelle arretiert wird. Die Lenkwelle (nicht gezeigt) fluchtet mit der Längsachse A des Fahrzeuglenkrads. Die Lenkwelle kann aber auch exzentrisch zur Längsachse A verlaufen.

Eine axial verlaufende Führungsnut 25 ist durch Eindrücken der Zylinderwand des Halteteils gebildet und dient dem vereinfachten Einsetzen des Gassackmoduls in das Halteteil 9.

Das Gassackmodul, welches in Fig. 3 nur abschnittsweise dargestellt ist, weist einen Gasgenerator 31, einen Gassack 33 sowie einen topfförmigen Generatorträger 35 auf, der zugleich eine Art Behälter für das Gassackmodul bildet. Eine vorderseitige Abdeckung 37 schließt das Gassackmodul nach außen ab und ist am Generatorträger 35 befestigt. Der Generatorträger 35 hat im Bereich der Ausnehmungen 11 ebenfalls Ausnehmungen 39, die einen Teil einer Rastverbindung bilden.

Das Gassackmodul wird über drei Rastverbindungen im Halteteil 9 fixiert. Die Rastverbindungen bestehen aus jeweils einem Federelement in Form eines umgeformten Federbleches 41 und der entsprechenden Ausnehmung 39.

Jedes Federblech 41 besteht aus einem länglichen Blechteil, welches im Bereich seines oberen und unteren Endes eine Kunststoffumspritzung 43 aufweist. Die Kunststoffumspritzung 43 kann das Federblech 41 auch wie ein Rahmen umgeben. Das Federblech 41 hat eine H-förmige, durch Stanzen gebildete Ausnehmung 45, die zwei Blechlappen 47, 49 definieren. Die Blechlappen sind damit nur einseitig mit dem Rest des Federblechs 41 verbunden und damit nur einseitig gelagert. Der Blechlappen 47 bildet einen sogenannten ersten Abschnitt und der Blechlappen 49 einen sogenannten zweiten Abschnitt des Federblechs 41. Der zweite Abschnitt 49 ist radial nach innen gebogen, wogegen der erste Abschnitt 47 im Querschnitt V-förmig umgeformt ist und mit der Spitze des "V" radial in Richtung zur Längsachse A ragt. Der Abschnitt 47 hat einen, in Fig. 3 dargestellten, oberen, allmählich radial nach innen sich erstreckenden Teil 51 und einen sich daran anschließenden abrupt nach außen verlaufenden Teil 53.

Das Federblech 41 und die Umspritzung 43 bilden einen Einsatz als separate, vormontierte Einheit, welche von innen in die Ausnehmung 11 gedrückt wird und darin verrastet. Dieses Verrasten erfolgt mittels entsprechend umgeformter Längsränder des Federblechs 41, wobei die Längsränder sogenannte dritte Abschnitt 61 des Federblechs 41 bilden.

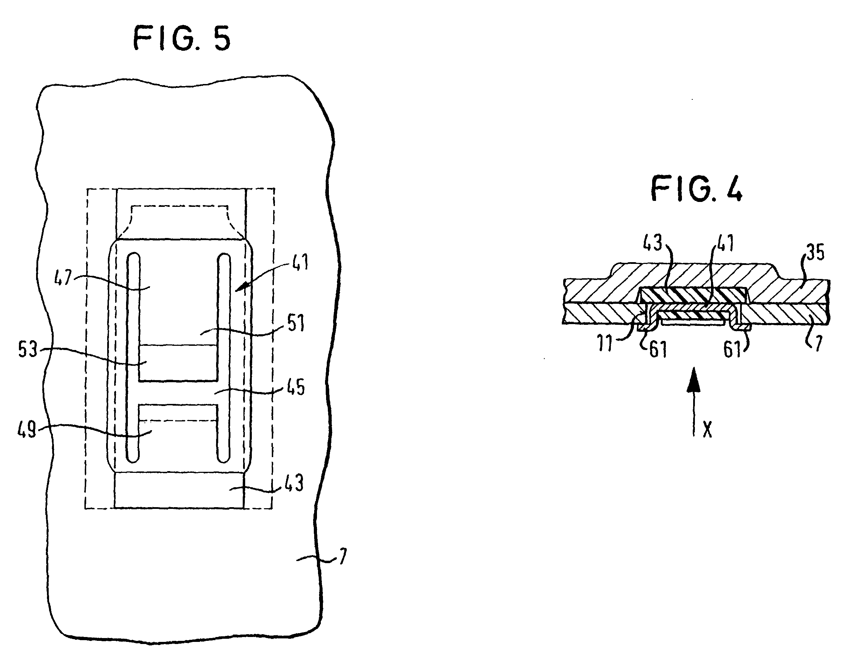

Wenn die drei gleichen Einsätze von innerhalb des topfförmigen Halteteils 9 aus in die entsprechenden Ausnehmungen 11 eingesetzt werden, hat das den Vorteil, daß dann das später eingesetzte Gassackmodul die Einsätze gegen Herausfallen sichert. Die Einsätze können in diesem Fall, da sie radial nach innen vorstehen, auch als Führung für das Gassackmodul dienen, wie Fig. 4 zeigt. Das Gassackmodul, genauer gesagt das Generatorhalteblech 35 muß nur eine entsprechende Führungsnut aufweisen.

Beim Einsetzen des ebenfalls topfförmigen Gassackmoduls in das Halteteil 9 dient die Führung 25 und/oder die in Fig. 4 gezeigte radial nach innen ragende Umspritzung 43 für eine Längsführung, mit der auch das Gassackmodul umfangsmäßig festgelegt wird.

Beim Nachuntenschieben des Gassackmoduls drückt der Bodenteil des Generatorträgers 35 den ersten Abschnitt 47 radial nach außen, bis die Ausnehmung 39 erreicht ist, in die der Abschnitt 47 einrastet zur Bildung einer Schnapp- oder Rastverbindung. Nahezu gleichzeitig erreicht die Unterseite des Generatorträgers 35 den zweiten Abschnitt 49, um auf diesem aufzuliegen. In der in Fig. 3 gezeigten Grundstellung drückt der zweite Abschnitt 49 das Gassackmodul axial nach oben bis zum Anschlag an die Unterseite des Teils 53 des ersten Abschnitts 47, so daß der Gasgeneratorträger zwischen diesen beiden Abschnitten lagefixiert und verspannt ist. Klappergeräusche können während des Fahrbetriebs somit nicht auftreten, denn es handelt sich um eine in der Grundstellung spielfreie Lagerung.

Zur Betätigung der Hupe muß das Gassackmodul axial nach unten gedrückt werden, bis zwei Kontakte (einer am Gasgeneratorträger und einer an der Stirnwand 21) einander berühren. Bei dieser Bewegung wird der zweite Abschnitt 49 elastisch gebogen. Wenn der Fahrer nicht mehr auf das Gassackmodul drückt, schiebt der zweite Abschnitt 49 das Gassackmodul wieder nach oben in die in Fig. 3 gezeigte Grundstellung. Die Anschläge 17 können auch Kontakte oder Mikroschalter aufnehmen, die der Hupenbetätigung dienen.

## Patentansprüche

1. Fahrzeuglenkrad, mit
einer Längsachse (A),
einer Lenkradnabe (7),
einem topfförmigen Halteteil (9), das an der Lenkradnabe befestigt oder Teil derselben ist,
einem Gassackmodul, das über wenigstens eine Rastverbindung mit dem Halteteil (9) verbunden ist und das zur Hupenbetätigung in Richtung Längsachse (A) verschieblich gelagert ist, wobei die Rastverbindung ein einstückiges Federelement aufweist, das verrastend das Gassackmodul und das Halteteil (9) miteinander verbindet und das zudem das Gassackmodul bei Hupenbetätigung in eine Grundstellung zurückbewegt,
**dadurch gekennzeichnet, daß**
das Federelement in eine modulseitige Ausnehmung (39) schnappt und an der Umfangswand des Halteteils vormontiert ist.

2. Fahrzeuglenkrad nach Anspruch 1, **dadurch gekennzeichnet, daß** das Federelement ein umgeformtes Federblech (41) ist.

3. Fahrzeuglenkrad nach Anspruch 2, **dadurch gekennzeichnet, daß** das Federblech (41) ein kunststoffumspritzter Einsatz ist.

4. Fahrzeuglenkrad nach einem der vorhergehenden Ansprüche, **dadurch gekennzeichnet, daß** das Federelement einen ersten Abschnitt (47) zur Schaffung der Rastverbindung und einen zweiten Abschnitt (49) zur Schaffung einer Rückstellkraft bei Hupenbetätigung hat.

5. Fahrzeuglenkrad nach Anspruch 4, **dadurch gekennzeichnet, daß** der erste Abschnitt (47) ein im Querschnitt V-förmiger, in die Ausnehmung (39) ragender umgeformter Abschnitt des als Federblech (41) ausgebildeten Federelements ist.

6. Fahrzeuglenkrad nach Anspruch 4 oder 5, **dadurch gekennzeichnet, daß** der zweite Abschnitt (49) ein radial bezüglich der Längsachse (A) abstehender, gebogener Abschnitt des als Federblech (41) ausgebildeten Federelements ist.

7. Fahrzeuglenkrad nach Anspruch 6, **dadurch gekennzeichnet, daß** der zweite Abschnitt (49) das Gassackmodul in der Grundstellung des Gassackmoduls so gegen den ersten Abschnitt (47) drückt, daß das Gassackmodul in der Grundstellung spielfrei gelagert ist.

8. Fahrzeuglenkrad nach einem der Ansprüche 4 bis 7, **dadurch gekennzeichnet, daß** das Federblech eine H-förmige Ausnehmung (45) hat, durch die zwei einseitig gelagerte Blechlappen definiert sind, die den ersten und den zweiten Abschnitt (47, 49) bilden.

9. Fahrzeuglenkrad nach einem der vorhergehenden Ansprüche, **dadurch gekennzeichnet, daß** das Federelement ein an dem Halteteil (9) oder dem Gassackmodul befestigter separater Einsatz ist.

10. Fahrzeuglenkrad nach Anspruch 9, **dadurch gekennzeichnet, daß** das Federelement ein Federblech (41) mit einem dritten Abschnitt (61) ist, mit dem es am Halteteil (9) oder am Gassackmodul befestigt ist.

11. Fahrzeuglenkrad nach einem der vorhergehenden Ansprüche, **dadurch gekennzeichnet, daß** das Halteteil (9) die topfförmig ausgebildete Lenkradnabe (7) ist, in die das Gassackmodul eingesetzt ist.

12. Fahrzeuglenkrad nach Anspruch 11, **dadurch gekennzeichnet, daß** das Halteteil (9) und das Gassackmodul eine axial verlaufende Führung (25) haben, die das Gassackmodul umfangsmäßig im Halteteil (9) positioniert.

## Claims

1. A vehicle steering wheel, comprising
a longitudinal axis (A),
a steering wheel hub (7),
a pot-shaped holding member (9) which is fastened to or part of the steering wheel hub,
a gas bag module which is connected with the holding member (9) via at least one latching connection and which is displaceably mounted in the direction of the longitudinal axis (A) for actuation of the horn, the latching connection having a one-piece spring element which connects the gas bag module and the holding member (9) with each other in a locking manner and which in addition moves the gas bag module back into a basic position on actuation of the horn,
**characterized in that**
the spring element snaps into a recess (39) on the module side and is premounted on the peripheral wall of the holding member.

2. The vehicle steering wheel according to Claim 1, **characterized in that** the spring element is a reshaped spring plate (41).

3. The vehicle steering wheel according to Claim 2, **characterized in that** the spring plate (41) is an insert embedded in plastic by injection molding.

4. The vehicle steering wheel according to any of the preceding claims, **characterized in that** the spring element has a first section (47) to provide the latching connection and a second section (49) to provide a restoring force on actuation of the horn.

5. The vehicle steering wheel according to Claim 4, **characterized in that** the first section (47) is a reshaped section of the spring element configured as spring plate (41), the section being V-shaped in cross-section and protruding into the recess (39).

6. The vehicle steering wheel according to Claim 4 or 5, **characterized in that** the second section (49) is a bent section of the spring element configured as spring plate (41) and projects radially with respect to the longitudinal axis (A).

7. The vehicle steering wheel according to Claim 6, **characterized in that** in the basic position of the gas bag module, the second section (49) presses the gas bag module against the first section (47) in such a manner that the gas bag module is mounted free of play in the basic position.

8. The vehicle steering wheel according to any of Claims 4 to 7, **characterized in that** the spring plate has an H-shaped recess (45) defining two one-sidedly mounted sheet metal tongues which form the first and second sections (47, 49).

9. The vehicle steering wheel according to any of the preceding claims, **characterized in that** the spring element is a separate insert fastened to the holding member (9) or to the gas bag module.

10. The vehicle steering wheel according to Claim 9, **characterized in that** the spring element is a spring plate (41) having a third section (61) by which it is fastened to the holding member (9) or to the gas bag module.

11. The vehicle steering wheel according to any of the preceding claims, **characterized in that** the holding member (9) is the steering wheel hub (7), designed in a pot shape, in which the gas bag module is inserted.

12. The vehicle steering wheel according to Claim 11, **characterized in that** the holding member (9) and the gas bag module have an axially extending guide (25) which positions the gas bag module peripherally in the holding member (9).

## Revendications

1. Volant de direction de véhicule, comportant
un axe longitudinal (A),
un moyeu de volant de direction (7),
une pièce de retenue (9) en forme de pot qui est fixée sur le moyeu de volant de direction ou fait partie de celui-ci,
un module de coussin à gaz qui est relié par au moins une liaison par enclenchement avec la pièce de retenue (9) et qui est monté de manière déplaçable en direction de l'axe longitudinal (A) pour actionner le klaxon, la liaison par enclenchement présentant un élément ressort d'un seul tenant qui relie par enclenchement le module de coussin à gaz et la pièce de retenue l'un à l'autre et qui ramène en outre le module de coussin à gaz dans une position de base lorsque le klaxon est actionné,
**caractérisé en ce que**
l'élément ressort s'encliquette dans un évidement (39) côté module et est préalablement monté sur la paroi périphérique de la pièce de retenue.

2. Volant de direction de véhicule selon la revendication 1, **caractérisé en ce que** l'élément ressort est une tôle à ressort (41) transformée.

3. Volant de direction de véhicule selon la revendication 2, **caractérisé en ce que** la tôle à ressort (41) est un insert enrobé de matière plastique par injection.

4. Volant de direction de véhicule selon l'une des revendications précédentes, **caractérisé en ce que** l'élément ressort a un premier tronçon (47) pour réaliser la liaison par enclenchement et un deuxième tronçon (49) pour réaliser une force de rappel en cas d'actionnement du klaxon.

5. Volant de direction de véhicule selon la revendication 4, **caractérisé en ce que** le premier tronçon (47) est un tronçon transformé de l'élément ressort, qui est réalisé sous forme de tôle à ressort (41), dont la section transversale est en forme de V et qui fait saillie dans l'évidement (39).

6. Volant de direction de véhicule selon la revendication 4 ou 5, **caractérisé en ce que** le deuxième tronçon (49) est un tronçon plié de l'élément ressort réalisé sous forme de tôle à ressort (41) et fait saillie par rapport à l'axe longitudinal (A).

7. Volant de direction de véhicule selon la revendication 6, **caractérisé en ce que** dans la position de base du module de coussin à gaz, le deuxième tronçon (49) presse le module de coussin à gaz contre le premier tronçon (47) de telle sorte que le module de coussin à gaz est monté sans jeu dans la position de base.

8. Volant de direction de véhicule selon l'une des revendications 4 à 7, **caractérisé en ce que** la tôle à ressort a un évidement (45) en forme de H qui définit deux pattes de tôle montées sur un côté, lesquelles forment le premier et deuxième tronçons (47, 49).

9. Volant de direction de véhicule selon l'une des revendications précédentes, **caractérisé en ce que** l'élément ressort est un insert séparé fixé sur la pièce de retenue (9) ou sur le module de coussin à gaz.

10. Volant de direction de véhicule selon la revendication 9, **caractérisé en ce que** l'élément ressort est une tôle à ressort (41) avec un troisième tronçon (61) par lequel il est fixé sur la pièce de retenue (9) ou sur le module de coussin à gaz.

11. Volant de direction de véhicule selon l'une des revendications précédentes, **caractérisé en ce que** la pièce de retenue (9) est le moyeu de volant de direction (7) réalisé sous forme de pot dans lequel est inséré le module de coussin à gaz.

12. Volant de direction de véhicule selon la revendication 11, **caractérisé en ce que** la pièce de retenue (9) et le module de coussin à gaz ont un guidage (25) s'étendant axialement qui positionne le module de coussin à gaz sur la périphérie de la pièce de retenue (9).
